# EUROPÄISCHE PATENTSCHRIFT

(11) **EP 0 503 135 B1**
(45) Veröffentlichungstag und Bekanntmachung des Hinweises auf die Patenterteilung: **20.12.1995**
(21) Anmeldenummer: 91117092.6
(22) Anmeldetag: 08.10.1991
(51) Int. Cl.: F16F 15/12, F16D 3/58

(54) **Elastische Kupplung mit zusammengefasster Lagerung und Drehbegrenzung**
Flexible coupling with combined bearing and rotation limiting device
Accouplement élastique à palier et limiteur de rotation combinés

(30) Priorität: 15.03.1991 DE 4108480
(43) Veröffentlichungstag der Anmeldung: 16.09.1992
(73) Patentinhaber: Firma Carl Freudenberg, 69469 Weinheim (DE)
(72) Erfinder: Hönlinger, Herwig, W-6845 Gross-Rohrheim (DE); Eichhorn, Jürgen, W-6940 Weinheim (DE)

(56) Entgegenhaltungen:
- EP-A- 0 357 887
- EP-A- 0 521 446
- GB-A- 2 019 529
- JP-A-62 137 443
- US-A- 2 479 278
- US-A- 2 739 462
- US-A- 3 263 452
- US-A- 3 859 821
- US-A- 3 996 767
- US-A- 4 932 809

## Beschreibung

Die Erfindung betrifft eine elastische Kupplung, umfassend einen Nabenring und einen den Nabenring zumindest teilweise mit radialem Abstand umschließenden Schwungring, die um eine gemeinsame Achse relativ verdrehbar, konzentrisch ineinander gelagert sind, wobei zwischen dem Naben- und dem Schwungring ein Federkörper aus elastomerem Werkstoff vorgesehen ist, und an dem Nabenring zumindest ein in radialer Richtung nach außen vorspringender erster Flansch und an dem Schwungring zumindest ein in radialer Richtung nach innen vorspringender zweiter Flansch und wobei der Naben- und der Schwungring durch den ersten und/oder den zweiten Flansch drehbeweglich aufeinander abgestützt sind, wobei wenigsten jeweils zwei gleichmäßig in Umfangsrichtung verteilte Ausnehmungen des ersten und des zweiten Flansches vorgesehen sind, die im ersten und im zweiten Flansch in Richtung des Nabenrings bzw. des Schwungrings offen und im Bereich der Ausnehmungen ineinandergreifend angeordnet sind, und wobei die Ausnehmungen des ersten und des zweiten Flansches in Umfangsrichtung durch einander gegenüberliegende Anschlagflächen begrenzt sind, die zumindest in einer Drehrichtung einen Abstand voneinander haben.

Eine elastische Kupplung dieser Art ist aus der JP 62-137 443 (A) bekannt. Danach besteht die Kupplung, die als Drehschwingungstilger ausgebildet ist, im wesentlichen aus einer Nabe, einem Schwungring, die die Nabe konzentrisch umschließt und einem Federkörper aus elastischem Werkstoff. Beim Auftreten großer Relativverdrehungen zwischen der Nabe und dem Schwungring schlagen die Anschlagflächen , die in radialer Richtung auf die Achse ausgerichtet sind, aneinander an und begrenzen die Größe der Relativverdrehung zwischen der Nabe und dem Schwungring. Der Körper aus elastischem Werkstoff ist dadurch von einer Überdehnung geschützt. Dabei ist allerdings zu beachten, daß insbesondere bei Extremverdrehungen der Kupplung und Anschlagen der Anschlagflächen von Nabe und Schwungring eine ungleichmäßige, verschleißfördernde Belastung auf die Gleitflächen der Lagerung erfolgen kann.

Eine weitere elastische Kupplung ist aus der GB-A-2 019 529 bekannt. Die Kupplung umfaßt eine innere Hülse und eine äußere Hülse, die einander konzentrisch zugeordnet sind und durch Federkörper aus elastomerem Werkstoff aufeinander abgestützt sind. Bei Extremverdrehungen der beiden Hülsen zueinander gelangt eine Dämpfungseinrichtung, die an der äußeren Hülse befestigt ist, mit Anschlagflächen in Berührung, die einen Bestandteil der inneren Hülse bilden. Die elastische Kupplung gelangt im Bereich einer Kardanwelle eines Kraftfahrzeugs zur Anwendung.

Eine weitere elastische Kupplung ist aus der DE-OS 39 13 547 bekannt. Danach besteht die Kupplung, die als Drehschwingungstilger ausgebildet ist, im wesentlichen aus einer Nabe, einem Schwungring, der die Nabe konzentrisch umschließt und einer Gummifedereinrichtung. Der Drehschwingungstilger ist derart ausgebildet, daß Taumelbewegungen verhindert werden sollen, wenn der Schwerpunkt des Schwungrings zur neutralen Faser der Drehfeder seitlich versetzt ist. Beim Auftreten großer Relativverdrehungen zwischen der Nabe und dem Schwungring besteht allerdings die Gefahr, daß die Gummifedereinrichtung überdehnt oder beschädigt wird und somit die Gebrauchsdauer des Drehschwingungstilgers stark eingeschränkt ist. Außerdem weist die vorbekannt Kupplung vergleichsweise große Abmessungen in axialer Richtung auf.

Der Erfindung liegt die Aufgabe zugrunde, eine elastische Kupplung zu zeigen, die durch verringerten Verschleiß im Bereich der Stützflächen eine deutlich verbesserte Gebrauchsdauer aufweist.

Diese Aufgabe wird erfindungsgemäß bei einer elastischen Kupplung der eingangs genannten Art mit den kennzeichnenden Merkmalen von Anspruch 1 gelöst. Auf vorteilhafte Ausgestaltung nehmen die Unteransprüche Bezug.

Bei der erfindungsgemäßen elastischen Kupplung ist von Vorteil, daß sich der Naben- und der Schwungring bei großen Verdrehwinkeln in Umfangsrichtung durch Anschlagen der Anschlagflächen aneinander selbst zentrieren. Dadurch wird die Belastung auf die Gleitflächen der Lagerung minimiert und die Gebrauchsdauer der Kupplung erheblich erhöht. Eine Zusammenfassung von Lagerung und Drehbegrenzung mit selbstzentrierenden Anschlagflächen zu einer Einheit bedingt eine längere Gebrauchsdauer bei guten Gebrauchseigenschaften der Kupplung. Eine Abstützung des Nabenrings in dem Schwungring oder des Schwungrings auf dem Nabenring ist für Anwendungsfälle mit geringerer radialer Belastung der Kupplung vorgesehen. Diese Ausgestaltungen zeichnen sich durch einfache und wirtschaftliche Herstellbarkeit aus. Bei größeren Belastungen der Kupplung in radialer Richtung können der Naben- und der Schwungring jeweils aufeinander abgestützt werden. Nabenring und Schwungring können so aufeinander abgestützt sein, daß die beiden gegenüberliegenden Anschlagflächen der Flansche in beiden Drehrichtungen oder zumindest in einer Drehrichtung einen Abstand voneinander haben. Haben die Anschlagflächen lediglich in einer Drehrichtung einen Abstand voneinander, wird während der bestimmungsgemäßen Verwendung der Kupplung eine Vorspannung in Umfangsrichtung aufgebracht, so daß sich zwei annähernd gleiche Abstände der gegenüberliegenden Anschlagflächen voneinander ergeben. Soll die Kupplung für beide Drehrichtungen verwendet werden, befinden sich die Flansche ungefähr mittig in den sie umgebenden offenen Ausnehmungen. Hierbei ist von Vorteil, daß ein und dieselbe Kupplung in Abhängigkeit vom jeweiligen Anwendungsfall zum Einsatz kommt. Mit erhöhtem Verschleiß im Bereich der Lagerstellen ist aufgrund der pendelnden Bewegung und nur kleiner Verdrehwinkel im Bereich von maximal ± 15° aus einer Mittellage, bei Verwendung entsprechender Werkstoffpaarungen und selbstzentrierenden Anschlagflächen von Naben- und Schwungring nicht zu rechnen. Auch besteht die Möglichkeit, bei Bedarf das innere der Kupplung mit einem viskosen Schmier- und Dämpfungsmedium zu füllen. Dabei ist auf eine gute Abdichtung des Gleitstellen zu achten, so daß das Medium nicht nach außen oder an das Federelement gelangt und dadurch die Gebrauchsdauer der Kupplung einschränkt. Durch Dämpfungsmedien mit unterschiedlicher Viskosität oder Reibwerten kann die Dämpfungscharakterisktik der Kupplung zusätzlich beeinflußt werden, ebenso wie durch die Querschnittsform der Flansche, um die relative Beweglichkeit zwischen Nabenring und Schwungring auf einen spezifischen Wert einzustellen. Kanalartige Durchtrittsöffnungen durch die Flansche in Umfangsrichtung bewirken eine geringere Dämpfung und stärkere Belastung des elastomeren Federkörpers. Je geringer der Durchtrittsquerschnitt durch die Flansche ist, desto hochgradiger ist die Dämpfung.

Die Anschlagflächen können sich parallel zu der Achse erstrecken. Hierbei ist von Vorteil, daß die Anschlagflächen des Flansche und die Ausnehmungen des Naben- und des Schwungrings besonders einfach und wirtschaftlich herstellbar sind.

Vorzugsweise sind zwei bis fünf gleichmäßig in Umfangsrichtung verteilte Ausnehmungen vorzusehen, um eine wirtschaftliche Herstellbarkeit zu gewährleisten.

Darüber hinaus ist vorgesehen, daß der Schwungring mit dem zweiten Flansch und/oder der Nabenring mit dem ersten Flansch einstückig ausgebildet sein kann. Die Montage ist durch wenige zu justierende Teile vereinfacht, die Paßform verbessert und eine wirtschaftlichere Herstellbarkeit der Kupplung wird erreicht.

Bei hohen Belastungen der Kupplung in radialer Richtung können den Flanschen Schmiernuten zugeordnet sein, die mit Schmiermitteln befüllbar sind. Die Reibpartner können aus dem gleichen, widerstandsfähigen und kostengünstigen Material bestehen, ohne daß erhöhter Verschleiß auftritt. Besonders einfach und wirtschaftlich ist das Anbringen der Nuten in den Flanschen, jedoch können sie auch in den Gegenflächen angeordnet sein.

Der Schwungring und der erste Flansch und/oder der Nabenring und der zweite Flansch können Gleitflächen aufweisen, die aus unterschiedlichen Werkstoffen bestehen. Zur Anwendung gelangen können metallische Werkstoffe und/oder Kunststoffe. Die Kombination von unterschiedlichen Werkstoffen wirkt sich oft vorteilhaft auf die Reibung zwischen den Gleitflächen und auf den Verschleiß aus. Auch die Notlaufeigenschaften von Kupplungen, die mit einem Schmiermittel versehen sind, werden bei Verlust des Schmiermittels häufig deutlich verbessert. Die Gleitflächen können beispielsweise aus Bronzelegierung oder Kunststoffen, wie PTFE oder Polyamid bestehen.

Die Gleitflächen der Flansche können zumindest teilweise eine Gleitschicht aufweisen. Ebenso ist es möglich, daß die Gleitflächen des Schwungrings und/oder die Gleitflächen des Nabenrings zumindest teilweise mit einer Gleitschicht versehen sind. Die Gleitschicht kann beispielsweise aus Kunststoff bestehen. Je nach Belastung der elastischen Kupplung können die Gleitflächen ganz oder teilweise mit einer Gleitschicht versehen sein, die beispielsweise aus Kunststoff besteht. Die Gleitschicht kann durch eine Folie gebildet sein, die zwischen dem Naben- und dem Schwungring angeordnet ist. Außerdem können der Naben- und/oder der Schwungring aus Kunststoff bestehen.

Diese Ausgestaltung bietet sich insbesondere für Kupplungen mit geringerer Belastung in radialer Richtung an. Eine Schmierung der Reibpartner ist dann nicht erforderlich, was die Gebrauchseigenschaften und die Herstellung vereinfacht.

Gemäß einer anderen Ausgestaltung ist es vorgesehen, daß zumindest die Gleitflächen von Naben- und Schwungring gehärtet sind. So können zum Beispiel leichte und/oder preiswerte Werkstoffe verwendet werden, die bei Bedarf mit einer besonders widerstandsfähigen und/oder reibungsarmen Oberfläche versehen werden können. Zur Beeinflussung der Dämpfungscharakteristik kann dann neben der Federrate des Federkörpers auch die Viskosität des evtl. verwendeten Schmiermittels variiert werden.

Der Gegenstand der vorliegenden Erfindung wird nachfolgend anhand der in der Anlage beigefügten Zeichnungen weiter erläutert. Die Fig. 1, 2 und 3 zeigen die erfindungsgemäße elastische Kupplung jeweils in längsgeschnittener Darstellung und einer Ansicht.
In Fig. 1 stützen sich die ersten Flansche 2 des Nabenrings 1 in den Ausnehmungen des Schwungrings 5 ab.
In Fig. 2 stützen sich die zweiten Flansche 6 des Schwungrings 5 in den Ausnehmungen ab, die am Außenumfang des Nabenrings 1 angeordnet sind.
In Fig. 3 sind der Naben- 1 und der Schwungring 5 durch erste 2 und zweite Flansche 6 drehbeweglich aufeinander abgestützt.

Die Anschlagflächen 9.2, 9.6 weisen von einer gedachten Ebene, die in der Achse errichtet ist, bevorzugt einen Winkel 10 von 20 bis 60° auf. In den hier gezeigten Ausführungsbeispielen beträgt der Winkel 10 45°.

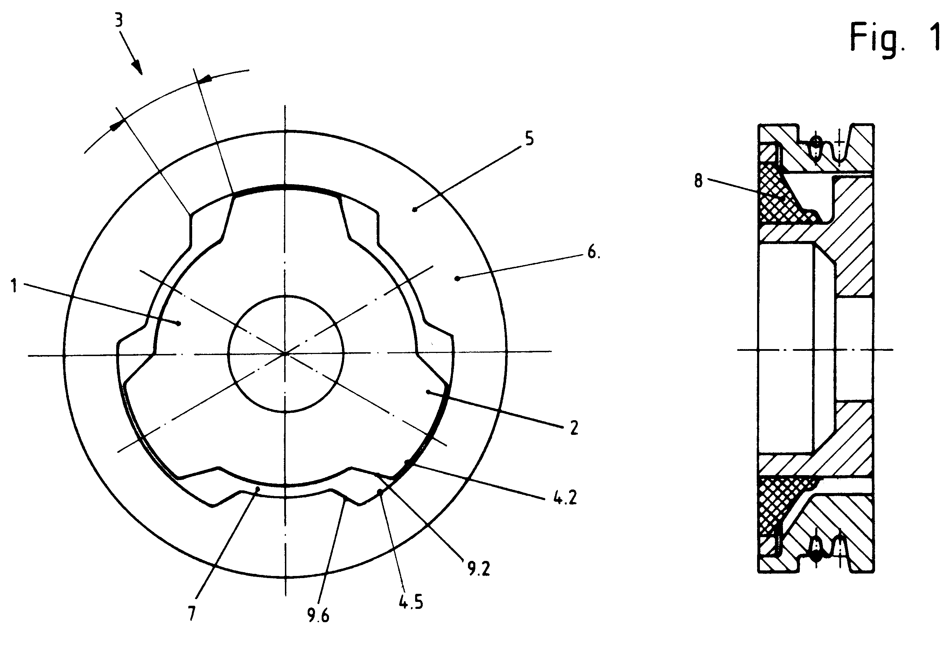

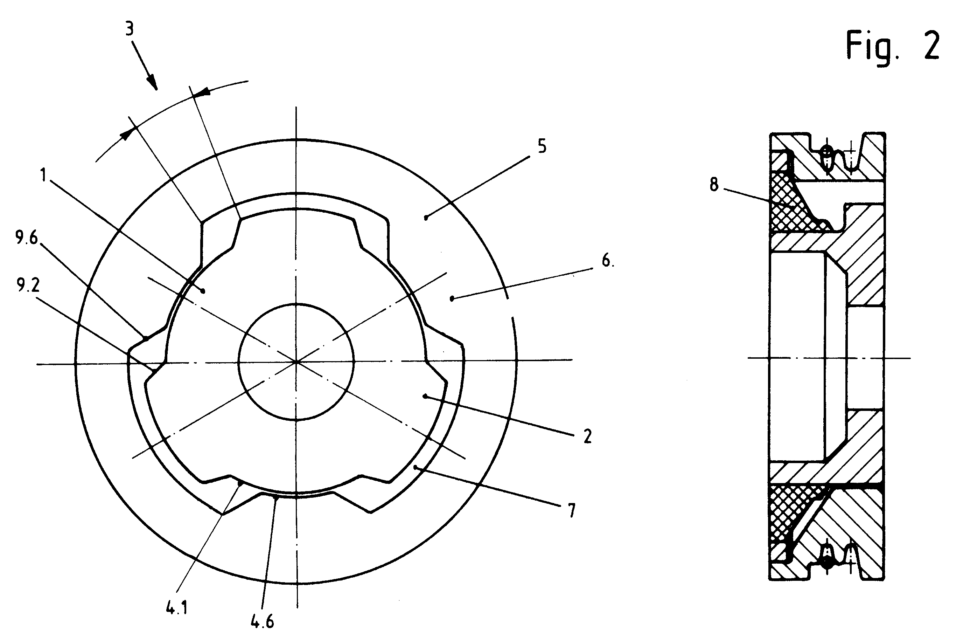

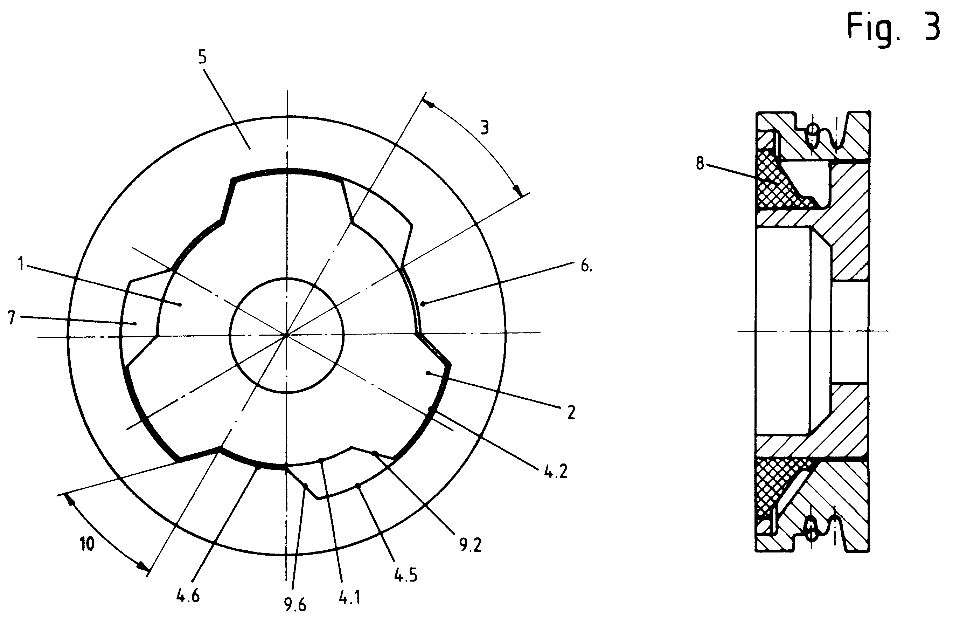

Die elastische Kupplung umfaßt in den Fig. 1 bis 3 im wesentlichen einen Nabenring 1, ein den Nabenring 1 wenigstens teilweise mit radialem Abstand 7 umschließenden Schwungring 5 und einen Federkörper 8 aus elastomerem Werkstoff. Dem Nabenring 1 und dem Schwungring 5 sind Anschlagnocken in Form von ersten 2 und zweiten Flanschen 6 zugeordnet, wobei die Flansche 2, 6 in derselben Radialebene angeordnet und mit offenen Ausnehmungen versehen und im Bereich der Ausnehmungen ineinander eingreifend angeordnet sind. Gemäß den Fig. 1, 2 und 3 erstrecken sich die Anschlagflächen 9.2, 9.6 der ersten 2 und zweiten Flansche 6 parallel zur Drehachse und sind einer in der Achse errichteten Ebene unter einem Winkel von 45° zugeordnet. Bei hohen Belastungen der Kupplung und großen Auslenkungen in Umfangsrichtung zentrieren sich Nabenring 1 und Schwungring 5 selbst und entlasten die Gleitflächen, wodurch die Gebrauchsdauer der Kupplung erhöht wird.

Im Hinblick auf einen ruhigen, weitgehend schwingungsfreien Rundlauf der elastischen Kupplung ist eine geringe Masse der beiden Kupplungshälften von Vorteil. Durch den relativ kleinen Verdrehwinkel 3 im Bereich von ± 15° aus einer Mittellage ist der zu erwartende Verschleiß an den Gleitflächen 4.1, 4.2; 4.5, 4.6 bei einer Materialpaarung der Reibpartner, die auf den jeweiligen Anwendungsfall abgestimmt ist und die bereits erläuterte Ausgestaltung der Anschlagflächen 9.2, 9.6, vernachlässigbar klein. Die erfindungsgemäße elastische Kupplung mit zusammengefaßter Lagerung und Drehbegrenzung weist gute Gebrauchseigenschaften und eine lange Lebensdauer auf und baut in axialer Richtung sehr kompakt. Die erfindungsgemäße elastische Kupplung ist daher in vielen Anwendungsfällen verwendbar.

## Patentansprüche

1. Elastische Kupplung, umfassend einen Nabenring (1) und einen den Nabenring (1) zumindest teilweise mit radialem Abstand umschließenden Schwungring (5), die um eine gemeinsame Achse relativ verdrehbar konzentrisch ineinander gelagert sind, wobei zwischen dem Naben- (1) und dem Schwungring (5) ein Federkörper (8) aus elastomerem Werkstoff vorgesehen ist und an dem Nabenring (1) zumindest ein in radialer Richtung nach außen vorspringender erster Flansch (2) und an dem Schwungring (5) zumindest ein in radialer Richtung nach innen vorspringender zweiter Flansch (6) und wobei der Naben-(1) und der Schwungring (5) durch den ersten (2) und/oder den zweiten Flansch (6) drehbeweglich aufeinander abgestützt sind, wobei wenigstens jeweils zwei gleichmäßig in Umfangsrichtung verteilte Ausnehmungen des ersten (2) und des zweiten Flansches (6) vorgesehen sind, die im ersten (2) und im zweiten Flansch (6) in Richtung des Schwungrings (5) bzw. des Nabenrings (1) offen und im Bereich der Ausnehmung ineinandergreifend angeordnet sind, und wobei die Ausnehmungen des ersten (2) und des zweiten Flansches (6) in Umfangsrichtung durch einander gegenüberliegende Anschlagflächen (9.2, 9.6) begrenzt sind, die zumindest in einer Drehrichtung einen Abstand voneinander haben, dadurch gekennzeichnet, daß die Anschlagflächen (9.2, 9.6) in einer achssenkrecht gedachten Ebene von der radialen Richtung um einen Winkel (10) von 20 bis 60° abweichen.

2. Kupplung nach Anspruch 1, dadurch gekennzeichnet, daß sich die Anschlagflächen (9.2, 9.6) parallel zu der Achse erstrecken.

3. Kupplung nach Anspruch 1 oder 2, dadurch gekennzeichnet, daß der Schwungring (5) mit dem zweiten Flansch (6) und/oder der Nabenring (1) mit dem ersten Flansch (2) einstückig ausgebildet ist.

4. Kupplung nach Anspruch 1 bis 3, dadurch gekennzeichnet, daß dem zweiten Flansch (6) und/oder dem ersten Flansch (2) Schmiernuten zugeordnet sind und daß die Schmiernuten mit Schmiermittel befüllbar sind.

5. Kupplung nach Anspruch 1 bis 4, dadurch gekennzeichnet, daß der Schwungring (5) und der erste Flansch (2) und/oder der Nabenring (1) und der zweite Flansch (6) Gleitflächen (4.5, 4.2; 4.1, 4.6) aufweisen; die aus unterschiedlichen Werkstoffen bestehen.

6. Kupplung nach Anspruch 5, dadurch gekennzeichnet, daß die Gleitfläche (4.2) des ersten Flansches (2) und/oder die Gleitfläche (4.6) des zweiten Flansches (6) zumindest teilweise eine Gleitschicht aufweisen.

7. Kupplung nach Anspruch 5, dadurch gekennzeichnet, daß die Gleitflächen (4.5) des Schwungrings (5) und/oder die Gleitflächen (4.1) des Nabenrings (1) zumindest teilweise mit einer Gleitschicht versehen sind.

8. Kupplung nach Anspruch 6 bis 7, dadurch gekennzeichnet, daß die Gleitschicht aus Kunststoff besteht.

9. Kupplung nach Anspruch 5, dadurch gekennzeichnet, daß die Gleitflächen (4.5, 4.2; 4.1, 4.6) gehärtet sind.

## Claims

1. A flexible coupling, comprising a hub ring (1) and a flywheel ring (5) enclosing the hub ring (1) at least partially at a radial distance, which are mounted concentrically one in the other so as to be relatively rotatable about a common axis, a spring body (8) made of elastomeric material being provided between the hub ring (1) and the flywheel ring (5) and there being supported on the hub ring (1) at least one radially outward-projecting first flange (2) and on the flywheel ring (5) at least one radially inward-projecting second flange (6), and the hub ring (1) and flywheel ring (5) being supported rotationally movably on one another by means of the first (2) and/or the second (6) flange, there being provided, in each case, at least two recesses of the first (2) and of the second (6) flange which are distributed uniformly in the circumferential direction and which are arranged in the first (2) and in the second (6) flange so as to be open in the direction of the flywheel ring (5) and of the hub ring (1) respectively and engaging in one another in the region of the recess, and the recesses of the first (2) and of the second (6) flange being limited in the circumferential direction by stop faces (9.2, 9.6) which are located opposite one another and which are at a distance from one another at least in one direction of rotation, characterized in that the stop faces (9.2, 9.6) differ from the radial direction by an angle (10) of from 20 to 60° in a plane imagined as perpendicular.

2. A coupling according to claim 1, characterized in that the stop faces (9.2, 9.6) extend parallel to the axis.

3. A coupling according to either of claims 1 and 2, characterized in that the flywheel ring (5) is made in one piece with the second flange (6) and/or the hub ring (1) is made in one piece with the first flange (2).

4. A coupling according to any of claims 1 to 3, characterized in that lubricating grooves are assigned to the second flange (6) and/or to the first flange (2), and in that the lubricating grooves can be filled with lubricant.

5. A coupling according to any of claims 1 to 4, characterized in that the flywheel ring (5) and the first flange (2) and/or the hub ring (1) and the second flange (6) have sliding faces (4.5, 4.2; 4.1, 4.6) which consist of different materials.

6. A coupling according to claim 5, characterized in that the sliding face (4.2) of the first flange (2) and/or the sliding face (4.6) of the second flange (6) have at least partially a sliding layer.

7. A coupling according to claim 5, characterized in that the sliding faces (4.5) of the flywheel ring (5) and/or the sliding faces (4.1) of the hub ring (1) are provided at least partially with a sliding layer.

8. A coupling according to either of claims 6 and 7, characterized in that the sliding layer consists of plastic.

9. A coupling according to claim 5, characterized in that the sliding faces (4.5, 4.2; 4.1, 4.6) are hardened.

## Revendications

1. Accouplement élastique, comprenant une frette de roue (1) et un anneau volant (5) entourant, au moins en partie à distance radiale, la frette de roue (1), qui sont montés concentriquement l'un dans l'autre et de manière à pouvoir effectuer une rotation relative autour d'un axe commun, un corps élastique (8) en matière élastomère étant prévu entre la frette de roue (1) et l'anneau volant (5), la frette de roue (1) étant pourvue d'au moins une première bride (2) saillant vers l'extérieur dans la direction radiale et l'anneau volant (5) étant pourvu d'au moins une deuxième bride (6) saillant vers l'intérieur dans la direction radiale, et la frette de roue (1) et l'anneau volant (5) étant appuyés l'un sur l'autre, de manière à pouvoir effectuer un mouvement de rotation, grâce à la première (2) et/ou à la deuxième bride (6), la première (2) et la deuxième bride (6) présentant chacune au moins deux évidements répartis uniformément dans la direction circonférentielle et qui, dans la première (2) et dans la deuxième bride (6), sont ouverts en direction de l'anneau volant (5) resp. de la frette de roue (1) et qui sont agencés de manière à s'emboîter l'un dans l'autre dans la région de l'évidement, et les évidements de la première (2) et de la deuxième bride (6) étant limités, dans la direction circonférentielle, par des surfaces d'arrêt (9.2, 9.6) situées l'une en face de l'autre qui présentent une distance entre elles, au moins dans une direction de rotation, cet accouplement élastique étant caractérisé en ce que les surfaces d'arrêt (9.2, 9.6) s'écartent de la direction radiale d'un angle (10) de 20 à 60°, dans un plan imaginaire perpendiculaire à l'axe.

2. Accouplement selon la revendication 1, caractérisé en ce que les surfaces d'arrêt (9.2, 9.6) s'étendent parallèlement à l'axe.

3. Accouplement selon l'une des revendications 1 ou 2, caractérisé en ce que l'anneau volant (5) est solidaire avec la deuxième bride (6) et/ou la frette de roue (1) est solidaire avec la première bride (2).

4. Accouplement selon les revendications 1 à 3, caractérisé en ce que la deuxième bride (6) et/ou la première bride (2) sont/est pourvue/s de rainures de graissage et en ce que ces rainures de graissage peuvent être remplies de lubrifiant.

5. Accouplement selon les revendications 1 à 4, caractérisé en ce que l'anneau volant (5) et la première bride (2) et/ou la frette de roue (1) et la deuxième bride (6) ont des surfaces de frottement (4.5, 4.2; 4.1, 4.6) qui sont faites dans des matériaux différents.

6. Accouplement selon la revendication 5, caractérisé en ce que la surface de frottement (4.2) de la première bride (2) et/ou la surface de frottement (4.6) de la deuxième bride (6) sont/est pourvue/s, au moins partiellement, d'une couche glissante.

7. Accouplement selon la revendication 5, caractérisé en ce que les surfaces de frottement (4.5) de l'anneau volant (5) et/ou les surfaces de frottement (4.1) de la frette de roue (1) sont pourvues, au moins partiellement, d'une couche glissante.

8. Accouplement selon les revendications 6 àt 7, caractérisé en ce que la couche glissante est formée d'une matière plastique.

9. Accouplement selon la revendication 5, caractérisé en ce que les surfaces de frottement (4.5, 4.2; 4.1, 4.6) sont durcies.
